# EUROPÄISCHE PATENTSCHRIFT

(11) **EP 3 839 441 B1**
(45) Veröffentlichungstag und Bekanntmachung des Hinweises auf die Patenterteilung: **30.03.2022**
(21) Anmeldenummer: 20204445.9
(22) Anmeldetag: 28.10.2020
(51) Int. Cl.: G01D 5/14

(54) **DREHGEBER**
ROTATIONAL ENCODER
ENCODEUR DE ROTATION

(30) Priorität: 19.12.2019 DE 102019135185
(43) Veröffentlichungstag der Anmeldung: 23.06.2021
(73) Patentinhaber: SICK AG, 79183 Waldkirch (DE)
(72) Erfinder: Hopp, David, 78166 Donaueschingen (DE); Süß, Sebastian, 78176 Blumberg (DE)
(74) Vertreter: Ludewigt, Christoph

(56) Entgegenhaltungen:
- EP-A1- 3 385 678
- EP-A2- 2 295 938
- DE-A1-102017 130 000

## Beschreibung

Die Erfindung betrifft einen Drehgeber zur Bestimmung einer Winkelposition einer Welle gemäß dem Oberbegriff des Anspruchs 1.

In vielfältigen Industrieanwendungen wird ein Drehgeber als eine Positionsmessvorrichtung eingesetzt, um eine mechanische Winkelposition zum Beispiel einer Welle zu bestimmen. Hierbei kann der Drehgeber auf einem optischen, kapazitiven, induktiven oder magnetischen Messprinzip beruhen. Die Bestimmung der Winkelposition kann inkrementell oder auch absolut erfolgen. Ein Drehgeber, der diese Winkelposition über 360° eindeutig bestimmt, wird auch als Singelturn-Drehgeber oder einfach Singleturn bezeichnet.

Als Erweiterung der Funktionalität des Drehgebers kann, neben einer Ermittlung der Winkelposition über nur eine Drehung der Welle um 360°, auch die Anzahl der erfolgten Drehungen erfasst und derart mechanisch oder elektrisch abgespeichert werden, so dass beim Einschalten des Drehgebers die Anzahl der erfolgten Drehungen eineindeutig ausgelesen werden kann. Ein Drehgeber, der auch die vollständigen Umdrehungen der Welle zählt, wird auch als Multiturn-Drehgeber oder einfach Multiturn bezeichnet. Dieser kann auch ausgebildet sein, insbesondere nach einer stromlosen Zeit, in welcher die Welle beispielsweise manuell gedreht werden kann, solche manuellen Drehungen auch im stromlosen Zustand zu zählen.

Bei einem getriebebasierten Multiturn-Drehgeber wird eine Drehbewegung der Welle des Drehgebers über eine mechanische Verzahnung abgegriffen, um eine serielle Übersetzungskaskade von Zahnrädern anzutreiben, wobei die Zahnräder eine stufenweise Übersetzung realisieren. Die Winkelpositionen einzelner Zahnräder in dieser Übersetzungskaskade können nun wiederum analog zur Ermittlung der Winkelposition beim Singleturn ermittelt werden. Auf diese Weise lässt sich die in den Drehstellungen der Zahnräder mechanisch gespeicherte Anzahl vollständiger Umdrehungen der Welle beim Einschalten des Geräts ermitteln.

Eine gängige Implementierung eines getriebebasierten Multiturn-Drehgebers besteht beispielsweise aus drei kaskadierten Getriebestufen mit einer Erfassungseinheit pro Getriebestufe, wobei die Erfassungseinheit die Drehung der jeweiligen Getriebestufe erfasst, wodurch beispielsweise bis zu 4096 Drehungen gezählt werden können.

Um eine Anforderung einer Sicherheitsnorm bzgl. eines sicheren Multiturn-Drehgebers zu erfüllen, zum Beispiel im Sinne der sogenannten Functional Safety SIL2 bzw. SIL3 (Safety Integrity Level), genügt ein einzelnes Multiturn-Getriebe nicht, da beispielsweise Beschädigungen an mechanischen Teilen, ein Fehlen einzelner Komponenten des Getriebes oder durch mechanische Toleranzen bedingte Störungen zu einer fehlerhaften Zählung der Anzahl der Umdrehungen führen können. Insbesondere ein Wellenabtrieb, das heißt eine Übertragung der Drehungen der Welle an das Getriebe, und die ersten Getriebestufen einer Übersetzungskaskade sind anfällig für mechanisches Versagen bzw. Fehler, da an diesen Stellen höhere Drehzahlen anliegen und größere mechanische Toleranzen vorherrschen als bei den verhältnismäßig langsamer drehenden nachgelagerten Getriebestufen.

Aus DE 10 2017 130 000 A1 ist ein Drehgeber mit den Merkmalen des Oberbegriffs des Anspruchs 1 beschrieben. Insbesondere ist ein Multiturn-Drehgeber offenbart, der eine Singleturn-Einheit und eine getriebebasierte Multiturn-Einheit aufweist.

EP 2 295 938 A2 offenbart einen Multiturn-Drehgeber, der eine Singleturn-Einheit, eine zählerbasierte Multiturn-Einheit und eine getriebebasierte Multiturn-Einheit aufweist.

Es ist eine Aufgabe der Erfindung, einen Drehgeber zur Bestimmung einer Winkelposition einer Welle der eingangsgenannten Art derart zu verbessern, dass eine sichere Bestimmung der Winkelposition der Welle gewährleistet ist.

Die Aufgabe wird erfindungsgemäß durch einen Drehgeber mit den Merkmalen des Anspruchs 1 gelöst.

Hierdurch ergibt sich der Vorteil, dass, im Falle eines insbesondere mechanischen Fehlers zwischen der Welle und den ersten und zweiten Getrieben oder in dem ersten bzw. zweiten Getriebe selbst, eine Unstimmigkeit zwischen den gezählten Drehungen der beiden Getriebe erfassbar ist, so dass auf einen Fehler geschlossen werden kann.

Gemäß einem bevorzugten Ausführungsbeispiel weist die erste Getriebestufe des zweiten Getriebes keine Erfassungseinheit auf. Damit lassen sich die Kosten für verwendete Bauteile im Drehgeber reduzieren. Insbesondere lässt sich ein vorhandener Drehgeber in einen Drehgeber gemäß der Erfindung umwandeln, indem eine Erfassungseinheit an einer geeigneten Position entfernt und die Auswerteeinheit entsprechend weitergebildet wird.

Gemäß einem weiteren bevorzugten Ausführungsbeispiel umfasst jede Erfassungseinheit einen Magneten und einen Hallsensor. Hierdurch ist es auf einfachem Wege möglich, ausgewählte Getriebestufen mit einer Erfassungseinheit vorzusehen oder bei einer ausgewählten Getriebestufe die Erfassungseinheit wegzulassen.

Weiterhin umfassen gemäß einem weiteren bevorzugten Ausführungsbeispiel das erste und zweite Getriebe jeweils mehrere kaskadierte Getriebestufen, so dass für jedes Getriebe mehrere Getriebestufen vorgesehen werden können. Insbesondere bilden die beiden ersten Getriebestufen jeweils eine erste Getriebestufe der jeweiligen Kaskade des ersten bzw. zweiten Getriebes und sind direkt an der Welle angeordnet, wobei die nachgelagerte Getriebestufe eine zweite Getriebestufe des zweiten Getriebes bildet.

Hierbei können die Kaskadierungen so ausgelegt sein, dass vorzugsweise die beiden ersten Getriebestufen an eine beliebige Position, insbesondere beabstandet von der Welle, in der jeweiligen Kaskade des ersten und zweiten Getriebes angeordnet sind. Dabei weist vorzugsweise in beiden Kaskade des ersten und zweiten Getriebes lediglich die als erste Getriebestufe bestimmte Getriebestufe des zweiten Getriebes keine Erfassungseinheit auf.

Gemäß einem anderen bevorzugten Ausführungsbeispiel bildet das erste Getriebe ein einstufiges Getriebe, dessen einzige Getriebestufe mit der ersten Erfassungseinheit versehen ist. Das zweite Getriebe umfasst demgegenüber mindestens zwei Getriebestufen, wobei der ersten Getriebestufe des zweiten Getriebes keine Erfassungseinheit zugeordnet ist und die zweite Getriebestufe des zweiten Getriebes die nachgelagerte Getriebestufe bildet und mit der zweiten Erfassungseinheit versehen ist. Hierdurch ergibt sich der Vorteil, dass das erste Getriebe sehr einfach ausgebildet sein kann, so dass Bauteile und die damit verbundenen Kosten eingespart werden können.

Vorteilhafterweise überprüft die Auswerteeinheit, ob sich die Winkelposition der nachgelagerten Getriebestufe des zweiten Getriebes im Verhältnis zur Winkelposition der ersten Getriebestufe des ersten Getriebes entsprechend dem bekannten Verhältnis der Getriebestufen ändert, oder ob sich die Winkelposition der nachgelagerten Getriebestufe des zweiten Getriebes nicht entsprechend dem Verhältnis, insbesondere völlig unabhängig, im Vergleich zur Winkelposition der ersten Getriebestufe des ersten Getriebes ändert. Mit anderen Worten, mit der Kenntnis über das Verhältnis der Drehung der nachgelagerten Getriebestufe des zweiten Getriebes zu der Drehung der ersten Getriebestufe des ersten Getriebes, das heißt in welcher relativen Winkelstellung die erste Getriebestufe des ersten Getriebes zur nachgelagerten Getriebestufe des zweiten Getriebes stehen muss, ist die Winkelposition der nachgelagerten Getriebestufe zu der Winkelposition der ersten Getriebestufe der anderen Kaskadierung bestimmt, so dass ein Vergleich einen möglichen Fehler des Drehgebers aufzeigen kann.

Daraus ergibt sich der Vorteil, dass eine Überprüfung eines beispielsweise mechanischen Fehlers an der Stelle der Getriebe mit dem größten Abtrieb möglich ist.

Das heißt, wenn sich die Winkelposition der nachgelagerten Getriebestufe des zweiten Getriebes zu der Winkelposition der ersten Getriebestufe des ersten Getriebes exakt entsprechend dem Verhältnis der Drehung der ersten Getriebestufe des ersten Getriebes zu der Drehung der nachgelagerten Getriebestufe des zweiten Getriebes ändert, dann ist ein fehlerfreier Betrieb des Drehgebers bestimmt. Wenn sich die Winkelpositionen der nachgelagerten Getriebestufe des zweiten Getriebes und der ersten Getriebestufe des ersten Getriebes jedoch nicht entsprechend dem Verhältnis, insbesondere völlig unabhängig, zueinander verändern, dann kann ein Fehler im Drehgeber festgestellt werden. Das heißt mit anderen Worten, das Verhältnis zwischen der Änderung der Winkelposition der nachgelagerten Getriebestufe des zweiten Getriebes und der Änderung der Winkelposition der ersten Getriebestufe des ersten Getriebes muss im fehlerfreien Fall dem bekannten Verhältnis entsprechen.

Gemäß einem weiteren bevorzugten Ausführungsbeispiel besteht jede Getriebestufe selbst aus kaskadierten Zahnrädern, wobei jede Getriebestufe mittels eines Abtriebs-Zahnrads, das für die jeweilige Getriebestufe eine vorgesehene Ausgangsdrehzahl an die nachgelagerte Getriebestufe abgibt, von der nachgelagerten Getriebestufe abgegrenzt ist. Hierdurch wird die Anzahl der Drehungen der nachgelagerten Getriebestufe gegenüber der Anzahl der vorhergehenden Getriebestufe reduziert, so dass eine höhere Genauigkeit der Zählung der Drehungen ermöglicht werden kann.

Vorteilhafterweise sind das Abtriebs-Zahnrad der ersten Getriebestufe des ersten Getriebes und das Abtriebs-Zahnrad der nachgelagerten Getriebestufe des zweiten Getriebes jeweils mit der ersten bzw. zweiten Erfassungseinheit ausgestattet. Hierbei weist das Abtriebs-Zahnrad der ersten Getriebestufe des zweiten Getriebes keine Erfassungseinheit auf.

Der erfindungsgemäße Drehgeber kann auf ähnliche Weise durch weitere Merkmale ausgestaltet werden und zeigt dabei ähnliche Vorteile. Derartige weitere Merkmale sind beispielhaft, aber nicht abschließend in den sich an den unabhängigen Anspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispiele erläutert. In der Zeichnung zeigen:
- Fig. 1: eine schematische Darstellung eines Grundaufbaus eines Drehgebers, und
- Fig. 2: eine schematische Detaildarstellung eines bevorzugten Ausführungsbeispiels einer erfindungsgemäßen Drehgebers.

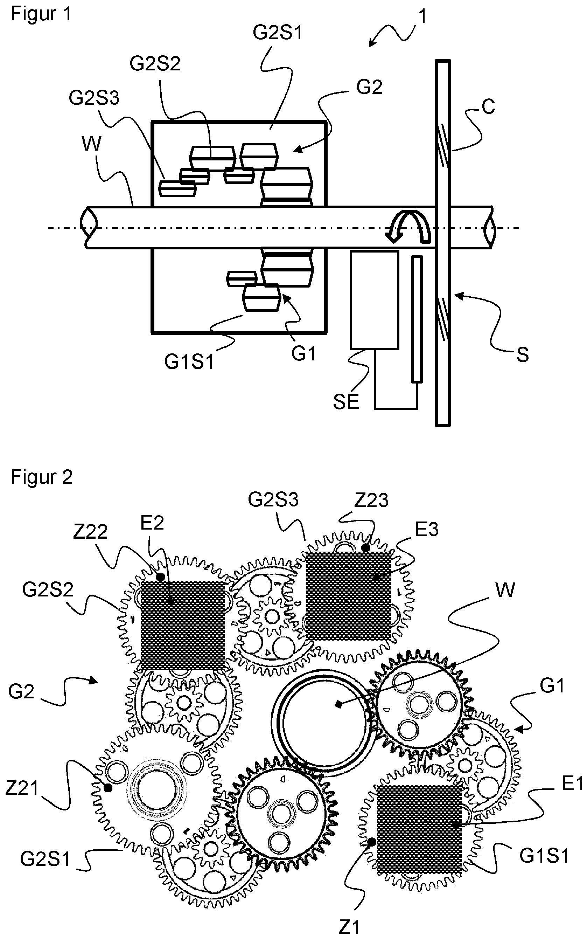

In der Figur 1 ist eine schematische Darstellung eines Ausführungsbeispiels eines Grundaufbaus eines Drehgebers 1 gezeigt, der Drehungen einer Welle W erfasst und daraus eine Winkelposition der Welle W bestimmt, um die Drehungen einer nicht dargestellten, externen Welle von beispielweise einer elektrischen Maschine zu steuern. Hierzu umfasst der Drehgeber 1 die Welle W, die wiederum mit der nicht dargestellten, externen Welle verbunden und durch diese angetrieben ist.

An der Welle W ist insbesondere eine Singleturneinheit S vorgesehen, die die Winkelposition der Welle W innerhalb einer Drehung der Welle W ausgibt. Die Singleturneinheit S weist eine an die Welle W montierte Codierungseinheit C und eine Singleturn-Erfassungseinheit SE auf, so dass die Codierungseinheit C jede Winkeländerung der Welle W innerhalb einer Drehung moduliert und die Singleturn-Erfassungseinheit SE diese modulierte Winkeländerung erfasst und als Winkelpositionssignale ausgibt.

Der Drehgeber 1 umfasst ein erstes Getriebe G1 und ein zweites Getriebe G2, die jeweils Drehungen der Welle W wiedergeben. Hierzu sind das erste und zweite Getriebe G1 und G2 mittels vorzugsweise eines in der Figur 1 nicht gekennzeichneten und an der Welle W montierten Zahnrades mit der Welle W verbunden, so dass beide Getriebe G1 und G2 unabhängig voneinander von der Welle W, vorteilhafterweise aber nicht zwingend mit einem identischen Antriebsübersetzungsverhältnis, angetrieben werden.

Die beiden Getriebe G1 und G2 weisen jeweils eine erste Getriebestufe G1S1 und G2S1 auf. An dieser Stelle sei erwähnt, dass sich die Bezeichnung "erste" nicht auf eine explizite Ortsangabe der Getriebestufen G1S1 und G2S1 innerhalb einer Reihenfolge von Getriebestufen G1S1; G2S1, G2S2, G2S3 des ersten bzw. zweiten Getriebes G1 bzw. G2 bezieht, sondern es sich um eine vereinfachte Kennzeichnung der Getriebestufen G1S1 und G2S1 handelt, auf die sich die Beschreibung der Erfindung im Folgenden weiter bezieht.

Das zweite Getriebe G2 umfasst bei diesem dargestellten Ausführungsbeispiel zwei weitere Getriebestufen G2S2 und G2S3, wobei die zweite Getriebestufe G2S2 des zweiten Getriebes G2 der ersten Getriebestufe G2S1 nachgelagert angeordnet ist und im Folgenden als "nachgelagerte Getriebestufe G2S2 des zweiten Getriebes G2" bezeichnet wird.

Mit anderen Worten und wie in der Figur 1 dargestellt, umfasst das zweite Getriebe G2 mehrere kaskadierte Getriebestufen G2S1, G2S2 und G2S3, wobei das erste Getriebe G1 vorzugsweise lediglich eine Getriebestufe als erste Getriebestufe G1S1 aufweist.

Hierbei bilden die beiden ersten Getriebestufen G1S1 und G2S1 vorzugsweise jeweils eine erste Getriebestufe der jeweiligen Kaskade des ersten bzw. zweiten Getriebes G1 bzw. G2 und sind direkt an der Welle W angeordnet, wobei die nachgelagerte Getriebestufe G2S2 eine zweite Getriebestufe des zweiten Getriebes G2 bildet. Hierdurch ist es möglich, eine Fehlerüberprüfung des Drehgebers 1 direkt an einer Stelle des Drehgebers 1 mit einer größtmöglichen mechanischen Belastung für den Drehgeber 1 durchzuführen.

Dem dargestellten Ausführungsbeispiel gegenüber können vorteilhafterweise sowohl das erste Getriebe G1 als auch das zweite Getriebe G2 jeweils mehrere kaskadierte Getriebestufen G1S1, G2S1, G2S2 und G2S2 umfassen, so dass eine höhere Genauigkeit der Erfassung der Drehungen der Welle W möglich wäre. Hierbei sind die beiden ersten Getriebestufen G1S1 und G2S1 an eine beliebige Position in der jeweiligen Kaskade, insbesondere beabstandet von der Welle W, des ersten bzw. zweiten Getriebes G1 und G2 angeordnet, so dass die Fehlerüberprüfung an eine Stelle des Drehgebers 1 mit weniger mechanischen Belastung der Getriebe G1 und G2 durchführbar wäre, wodurch beispielsweise eine erhöhte Zuverlässigkeit der Fehlerüberprüfung an sich gegeben ist.

Die Figur 2 zeigt eine schematische Detaildarstellung eines bevorzugten Ausführungsbeispiels eines erfindungsgemäßen Drehgebers 1, bei dem insbesondere das erste Getriebe G1 ein einstufiges Getriebe bildet, dessen einzige Getriebestufe G1S1 mit der ersten Erfassungseinheit E1 versehen ist. Das unabhängig von dem ersten Getriebe G1 angetriebene zweite Getriebe G2 umfasst mindestens zwei, in der Figur 2 drei dargestellten, Getriebestufen G2S1, G2S2 und G2S3, wobei der ersten Getriebestufe G2S1 des zweiten Getriebes G2 keine Erfassungseinheit zugeordnet ist und die nachgelagerte zweite Getriebestufe G2S2 des zweiten Getriebes G2 mit der zweiten Erfassungseinheit E2 versehen ist. Die dritte Getriebestufe G2S3 des zweiten Getriebes G2 weist ebenfalls eine dritte Erfassungseinheit E3 auf.

Erfindungsgemäß ist ein Verhältnis der Drehung der ersten Getriebestufe G1S1 des ersten Getriebes G1 zur Drehung der nachgelagerten zweiten Getriebestufe G2S2 des zweiten Getriebes G2 in einer nicht dargestellten Auswerteeinheit zum Ableiten der Winkelposition der Welle W aus den Signalen der Erfassungseinheiten E1 bis E3 hinterlegt, wobei das Verhältnis größer 2 zu 1 ist.

Das heißt, in der Auswerteeinheit ist hinterlegt bzw. gespeichert, dass beispielsweise, wenn sich die erste Getriebestufe G1S1 des ersten Getriebes G1 um zwei Drehungen gedreht hat, sich die nachgelagerte Getriebestufe G2S2 des zweiten Getriebes G2 um eine Drehung gedreht haben muss. Bei einem Verhältnis von 4 zu 1 bedeutet dies, dass wenn sich die erste Getriebestufe G1S1 des ersten Getriebes G1 um eine Drehung oder acht Drehungen gedreht hat, sich die nachgelagerte Getriebestufe G2S2 des zweiten Getriebes G2 um ein Viertel einer Drehung oder um zwei Drehungen gedreht haben muss.

Unter Berücksichtigung des bekannten Verhältnisses zwischen den Drehungen der ersten Getriebestufe G1S1 des ersten Getriebes G1 und der nachgelagerten Getriebestufe G2S2 des zweiten Getriebes G2 zueinander, vergleicht die Auswerteeinheit die Drehungen der ersten Getriebestufe G1S1 des ersten Getriebes G1 und der nachgelagerten Getriebestufe G2S2 des zweiten Getriebes G2 auf Plausibilität und leitet die Winkelposition der Welle W ab.

Hierdurch ist die Auswerteeinheit in der Lage, eine Konsistenz oder Inkonsistenz zwischen den erfassten Drehungen der ersten Getriebestufe G1S1 des ersten Getriebes G1 und der nachgelagerten Getriebestufe G2S2 des zweiten Getriebes G2 zu bestimmen, um daraus einen fehlerfreien Betrieb oder einen Fehler des Drehgebers 1 herzuleiten.

Insbesondere prüft die Auswerteeinheit, ob sich die Winkelposition der nachgelagerten Getriebestufe G2S2 des zweiten Getriebes G2 zu der Winkelposition der ersten Getriebestufe G1S1 des ersten Getriebes G1 entsprechend dem bekannten Verhältnis der Drehungen ändert, wobei das Verhältnis im fehlerfreien Fall durch die erste Getriebestufe G1S1 des ersten Getriebes G1 und die nachgelagerte Getriebestufe G2S2 des zweiten Getriebes G2 bestimmt ist. Ferner überprüft die Auswerteeinheit, ob sich die Winkelposition der nachgelagerten Getriebestufe G2S2 des zweiten Getriebes G2 nicht in dem bestimmten Verhältnis zu, insbesondere völlig unabhängig von, einer Winkelpositionsänderung der ersten Getriebestufe G1S1 des ersten Getriebes G1 ändert.

Falls das bekannte Verhältnis durch die Winkelpositionsänderung der nachgelagerten Getriebestufe G2S2 des zweiten Getriebes G2 zu der ersten Getriebestufe G1S1 des ersten Getriebes G1 wiedergegeben ist, so dass die Winkelpositionsänderung der Getriebestufen G1S1; G2S1, G2S2 und G2S3 der beiden Getriebe G1 und G2 zueinander plausibel ist, dann ist ein fehlerfreier Betrieb des Drehgebers 1 durch die Auswerteeinheit festgestellt.

Falls die Winkelpositionsänderung der nachgelagerten Getriebestufe G2S2 des zweiten Getriebes G2 jedoch beispielsweise völlig unabhängig von der Winkelpositionsänderung der ersten Getriebestufe G1S1 des ersten Getriebes G1 stattfindet, so dass die relativen Winkelpositionsänderungen nicht plausibel sind, dann kann die Auswerteeinheit des erfindungsgemäßen Drehgebers 1 einen Fehler in der Übertragung der Drehungen der Welle W über die erste und zweite Getriebe G1 und G2 zu den Erfassungseinheiten E1 bis E3 feststellen, wodurch eine Fehlfunktion des Drehgebers 1 erfasst wäre.

Da die Überprüfung über zwei voneinander unabhängigen Getrieben G1 und G2 durchgeführt wird, ist eine erhöhte funktionale Sicherheit des Drehgebers 1 gegeben, da ein Fehler eines der Getriebe G1 oder G2 zu einer Diskrepanz zwischen den Winkeländerungen des ersten und zweiten Getriebes G1 und G2 führt.

Wie in der Figur 2 dargestellt, besteht insbesondere jede Getriebestufe G1S1; G2S1, G2S2 und G2S3 selbst aus kaskadierten Zahnrädern, wobei die Getriebestufen G1S1; G2S1, G2S2 und G2S3 des ersten bzw. zweiten Getriebes G1 bzw. G2 mittels eines Abtriebs-Zahnrads Z1; Z21, Z22 und Z23 von der jeweiligen, nachgelagerten Getriebestufe G2S2 und G2S3 abgegrenzt ist. Hierbei geben die Abtriebs-Zahnräder Z1; Z21, Z22 und Z23 für die jeweilige Getriebestufe G1S1; G2S1, G2S2 und G2S3 eine vorgesehene Ausgangsdrehzahl an die jeweils nachgelagerte Getriebestufe G2S2 und G2S3 ab.

Gemäß dem dargestellten Ausführungsbeispiel sind das Abtriebs-Zahnrad Z1 der ersten Getriebestufe G1S1 des ersten Getriebes G1 mit der ersten Erfassungseinheit E1 und die Abtriebs-Zahnräder Z22 und Z23 der nachgelagerten Getriebestufe G2S2 und der dritten Getriebestufe G2S3 des zweiten Getriebes G2 jeweils mit der zweiten bzw. dritten Erfassungseinheit E2 bzw. E3 ausgestattet. Das Abtriebs-Zahnrad Z21 der ersten Getriebestufe G2S1 des zweiten Getriebes G2 weist keine Erfassungseinheit auf. Hierdurch ist die erhöhte funktionale Sicherheit des Drehgebers 1, trotz Einsparung an Bauteilen wie beispielsweise Getriebestufen oder Erfassungseinheiten, gegeben.

### Bezugszeichenliste

- 1: Drehgeber
- C: Codierungseinheit
- E1, E2, E3: Erfassungseinheit
- G1 und G2: Erstes und zweites Getriebe
- G1S1: Erste Getriebestufe des ersten Getriebes
- G2S1: Erste Getriebestufe des zweiten Getriebes
- G2S2: Nachgelagerte Getriebestufe des zweiten Getriebes
- G2S3: Getriebestufe des zweiten Getriebes
- S: Singleturneinheit
- SE: Singleturn-Erfassungseinheit
- W: Welle
- Z1, Z21, Z22,: Abtriebs-Zahnrad
Z23

## Patentansprüche

1. Drehgeber (1) zur Bestimmung einer Winkelposition einer Welle (W), umfassend:
- die Welle (W), die mit einer externen Welle verbunden ist und durch diese antreibbar ist,
- ein erstes Getriebe (G1) und ein zweites Getriebe (G2), die jeweils Drehungen der Welle (W) wiedergeben, wobei beide Getriebe (G1 und G2) unabhängig voneinander von der Welle (W) antreibbar sind, und
- eine Auswerteeinheit zum Ableiten der Winkelposition,
**dadurch gekennzeichnet, dass** eine erste Getriebestufe (G1S1) des ersten Getriebes (G1) eine erste Erfassungseinheit (E1) aufweist, und eine einer ersten Getriebestufe (G2S1) des zweiten Getriebes (G2) nachgelagerte Getriebestufe (G2S2) eine zweite Erfassungseinheit (E2) aufweist,
die Auswerteeinheit ausgebildet ist, die Drehungen der ersten Getriebestufe (G1S1) des ersten Getriebes (G1) und der nachgelagerten Getriebestufe (G2S2) des zweiten Getriebes (G2) unter Berücksichtigung eines bekannten Verhältnisses der Drehung der ersten Getriebestufe (G1S1) des ersten Getriebes (G1) zur Drehung der nachgelagerten Getriebestufe (G2S2) des zweiten Getriebes (G2) auf Plausibilität zu vergleichen,
wobei das Verhältnis größer 2 zu 1 ist, und dass die Auswerteeinheit ausgebildet ist, die Winkelposition der Welle (W) aus den Signalen wenigstens der beiden Erfassungseinheiten (E1 und E2) abzuleiten.

2. Drehgeber (1) nach Anspruch 1, **dadurch gekennzeichnet, dass** die erste Getriebestufe (G2S1) des zweiten Getriebes (G2) keine Erfassungseinheit aufweist.

3. Drehgeber (1) nach Anspruch 1 oder 2, **dadurch gekennzeichnet, dass** jede Erfassungseinheit (E1, E2) einen Magnet und einen Hallsensor umfasst.

4. Drehgeber (1) nach zumindest einem der vorhergehenden Ansprüche, **dadurch gekennzeichnet, dass** das erste und zweite Getriebe (G1 und G2) jeweils mehrere kaskadierte Getriebestufen (G1S1; G2S1, G2S2, G2S3) umfassen.

5. Drehgeber (1) nach Anspruch 4, **dadurch gekennzeichnet, dass** die beiden ersten Getriebestufen (G1S1, G2S1) jeweils eine erste Getriebestufe der jeweiligen Kaskade des ersten bzw. zweiten Getriebes (G1 bzw. G2) bilden und direkt an der Welle (W) angeordnet sind, und die nachgelagerte Getriebestufe (G2S2) eine zweite Getriebestufe des zweiten Getriebes (G2) bildet.

6. Drehgeber (1) nach Anspruch 4, **dadurch gekennzeichnet, dass** die beiden ersten Getriebestufen (G1S1; G2S1) an eine beliebige Position, insbesondere beabstandet von der Welle (W), in der jeweiligen Kaskade des ersten und zweiten Getriebes (G1, G2) angeordnet sind.

7. Drehgeber (1) nach Anspruch 6, **dadurch gekennzeichnet, dass** in beiden Kaskade des ersten und zweiten Getriebes (G1, G2) lediglich die als erste Getriebestufe bestimmte Getriebestufe (G2S1) des zweiten Getriebes (G2) keine Erfassungseinheit aufweist.

8. Drehgeber (1) nach zumindest einem der vorhergehenden Ansprüche 1 bis 3, **dadurch gekennzeichnet, dass** das erste Getriebe (G1) ein einstufiges Getriebe bildet, dessen einzige Getriebestufe (G1S1) mit der ersten Erfassungseinheit (E1) versehen ist, und das zweite Getriebe (G2) mindestens zwei Getriebestufen (G2S1, G2S2, G2S3) umfasst, wobei der ersten Getriebestufe (G2S1) des zweiten Getriebes (G2) keine Erfassungseinheit zugeordnet ist und die zweite Getriebestufe des zweiten Getriebes (G2) die nachgelagerte Getriebestufe (G2S2) bildet und mit der zweiten Erfassungseinheit (E2) versehen ist.

9. Drehgeber (1) nach zumindest einem der vorhergehenden Ansprüche, **dadurch gekennzeichnet, dass** die Auswerteeinheit überprüft, ob sich die Winkelposition der nachgelagerten Getriebestufe (G2S2) des zweiten Getriebes (G2) entsprechend dem bekannten Verhältnis der Drehungen zu der Winkelposition der ersten Getriebestufe (G1S1) des ersten Getriebes (G1) ändert, oder ob sich die Winkelposition der nachgelagerten Getriebestufe (G2S2) des zweiten Getriebes (G2) nicht in dem bekannten Verhältnis zu, insbesondere völlig unabhängig von, einer Winkelpositionsänderung der ersten Getriebestufe (G1S1) des ersten Getriebes (G1) ändert.

10. Drehgeber (1) nach einem der vorhergehenden Ansprüche 1 bis 9, **dadurch gekennzeichnet, dass** jede Getriebestufe (G1S1, G2S1, G2S2, G2S3) selbst aus kaskadierten Zahnrädern besteht und mittels eines Abtriebs-Zahnrads (Z1, Z21, Z22, Z23), das für die jeweilige Getriebestufe eine vorgesehene Ausgangsdrehzahl an die nachgelagerte Getriebestufe (G2S2, G2S3) abgibt, von der nachgelagerten Getriebestufe (G2S2, G2S3) abgegrenzt ist.

11. Drehgeber (1) nach Anspruch 10, **dadurch gekennzeichnet, dass** das Abtriebs-Zahnrad (Z1) der ersten Getriebestufe (G1S1) des ersten Getriebes (G1) und das Abtriebs-Zahnrad (Z22) der nachgelagerten Getriebestufe (G2S2) des zweiten Getriebes (G2) jeweils mit der ersten bzw. zweiten Erfassungseinheit (E1, E2) ausgestattet sind und das Abtriebs-Zahnrad (Z21) der ersten Getriebestufe (G2S1) des zweiten Getriebes (G2) keine Erfassungseinheit aufweist.

## Claims

1. Rotary encoder (1) for determining an angular position of a shaft (W), comprising:
- the shaft (W) connected to an external shaft and drivable thereby,
- a first gear (G1) and a second gear (G2), each of which reproduces rotations of the shaft (W), both gears (G1 and G2) being drivable independently of each other by the shaft (W), and
- an evaluation unit for deriving the angular position,
**characterized in that** a first gear stage (G1S1) of the first gear (G1) has a first detection unit (E1), and a gear stage (G2S2) downstream of a first gear stage (G2S1) of the second gear (G2) has a second detection unit (E2),
the evaluation unit is designed to compare the rotations of the first gear stage (G1S1) of the first gear (G1) and of the downstream gear stage (G2S2) of the second gear (G2) for plausibility, taking into account a known ratio of the rotation of the first gear stage (G1S1) of the first gear (G1) to the rotation of the downstream gear stage (G2S2) of the second gear (G2), the ratio being greater than 2 to 1, and **in that** the evaluation unit is designed to derive the angular position of the shaft (W) from the signals of at least the two detection units (E1 and E2).

2. Rotary encoder (1) according to claim 1, **characterized in that** the first gear stage (G2S1) of the second gear (G2) has no detection unit.

3. Rotary encoder (1) according to claim 1 or 2, **characterized in that** each detection unit (E1, E2) comprises a magnet and a Hall sensor.

4. Rotary encoder (1) according to at least one of the preceding claims, **characterized in that** the first and second gears (G1 and G2) each comprise a plurality of cascaded gear stages (G1S1; G2S1, G2S2, G2S3).

5. Rotary encoder (1) according to claim 4, **characterized in that** the two first gear stages (G1S1, G2S1) each form a first gear stage of the respective cascade of the first or second gear (G1 or G2) and are arranged directly on the shaft (W), and the downstream gear stage (G2S2) forms a second gear stage of the second gear (G2).

6. Rotary encoder (1) according to claim 4, **characterized in that** the two first gear stages (G1S1; G2S1) are arranged at any position, in particular at a distance from the shaft (W), in the respective cascade of the first and second gears (G1, G2).

7. Rotary encoder (1) according to claim 6, **characterized in that** in both cascades of the first and second gears (G1, G2) only the gear stage (G2S1) of the second gear (G2) determined as the first gear stage has no detection unit.

8. Rotary encoder (1) according to at least one of the preceding claims 1 to 3, **characterized in that** the first gear (G1) forms a single stage gear whose single gear stage (G1S1) is provided with the first detection unit (E1), and the second gear (G2) comprises at least two gear stages (G2S1, G2S2, G2S3), wherein the first gear stage (G2S1) of the second gear (G2) is not assigned a detection unit and the second gear stage of the second gear (G2) forms the downstream gear stage (G2S2) and is provided with the second detection unit (E2).

9. Rotary encoder (1) according to at least one of the preceding claims, **characterized in that the** evaluation unit checks whether the angular position of the downstream gear stage (G2S2) of the second gear (G2) changes in accordance with the known ratio of the rotations to the angular position of the first gear stage (G1S1) of the first gear (G1), or whether the angular position of the downstream gear stage (G2S2) of the second gear (G2) does not change in the known ratio to, in particular completely independently of, an angular position change of the first gear stage (G1S1) of the first gear (G1).

10. Rotary encoder (1) according to one of the preceding claims 1 to 9, **characterized in that** each gear stage (G1S1, G2S1, G2S2, G2S3) itself consists of cascaded gears and is separated from the downstream gear stage (G2S2, G2S3) by means of an output gear wheel (Z1, Z21, Z22, Z23), which delivers an intended output speed for the respective gear stage to the downstream gear stage (G2S2, G2S3).

11. Rotary encoder (1) according to claim 10, **characterized in that** the output gear wheel (Z1) of the first gear stage (G1S1) of the first gear (G1) and the output gear wheel (Z22) of the downstream gear stage (G2S2) of the second gear (G2) are each equipped with the first and second detection unit (E1, E2) respectively, and the output gear wheel (Z21) of the first gear stage (G2S1) of the second gear (G2) has no detection unit.

## Revendications

1. Capteur rotatif (1) pour déterminer une position angulaire d'un arbre (W), comprenant :
- l'arbre (W) qui est relié à un arbre externe et peut être entraîné par celui-ci,
- un premier engrenage (G1) et un deuxième engrenage (G2), chacun reproduisant des rotations de l'arbre (W), les deux engrenages (G1 et G2) pouvant être entraînés indépendamment l'un de l'autre par l'arbre (W) et
- une unité d'évaluation pour déduire la position angulaire,
**caractérisé en ce qu'**un premier étage d'engrenage (G1S1) du premier engrenage (G1) comporte une première unité de détection (E1), et un étage d'engrenage (G2S2) en aval d'un premier étage d'engrenage (G2S1) du deuxième engrenage (G2) comporte une deuxième unité de détection (E2),
l'unité d'évaluation est conçue pour comparer les rotations du premier étage d'engrenage (G1S1) du premier engrenage (G1) et de l'étage d'engrenage en aval (G2S2) du deuxième engrenage (G2) quant à leur plausibilité, en tenant compte d'un rapport connu entre la rotation du premier étage d'engrenage (1GS1) du premier engrenage (G1) et la rotation de l'étage d'engrenage en aval (G2S2) du deuxième engrenage (G2), le rapport étant supérieur à 2 à 1, et **en ce que** l'unité d'évaluation est conçue pour déduire la position angulaire de l'arbre (W) à partir des signaux d'au moins les deux unités de détection (E1 et E2).

2. Capteur rotatif (1) selon la revendication 1, **caractérisé en ce que** le premier étage d'engrenage (G2S1) du deuxième engrenage (G2) ne comporte pas d'unité de détection.

3. Capteur rotatif (1) selon la revendication 1 ou 2, **caractérisé en ce que** chaque unité de détection (E1, E2) comprend un aimant et un capteur à effet Hall.

4. Capteur rotatif (1) selon au moins l'une des revendications précédentes, **caractérisé en ce que** le premier et le deuxième engrenage (G1 et G2) comprennent chacun plusieurs étages d'engrenages en cascade (G1S1; G2S1, G2S2, G2S3).

5. Capteur rotatif (1) selon la revendication 4, **caractérisé en ce que** les deux premiers étages d'engrenages (G1S1, G2S1) forment chacun un premier étage d'engrenage de la cascade respective du premier ou du deuxième engrenage (G1 ou G2) et sont disposés directement sur l'arbre (W), et l'étage d'engrenage en aval (G2S2) forme un deuxième étage d'engrenage du deuxième engrenage (G2).

6. Capteur rotatif (1) selon la revendication 4, **caractérisé en ce que les** deux premiers étages d'engrenages (G1S1; G2S1) sont disposés à une position quelconque, en particulier à une distance de l'arbre (W), dans la cascade respective du premier et du deuxième engrenage (G1, G2).

7. Capteur rotatif (1) selon la revendication 6, **caractérisé en ce que** dans les deux cascades du premier et du deuxième engrenage (G1, G2), seul l'étage d'engrenage (G2S1) du deuxième engrenage (G2) déterminé comme premier étage d'engrenage ne comporte pas d'unité de détection.

8. Capteur rotatif (1) selon au moins l'une des revendications précédentes 1 à 3, **caractérisé en ce que** le premier engrenage (G1) forme un engrenage à un étage dont l'étage d'engrenage unique (G1S1) est pourvu de la première unité de détection (E1), et le deuxième engrenage (G2) comporte au moins deux étages d'engrenages (G2S1, G2S2, G2S3), le premier étage d'engrenage (G2S1) du deuxième engrenage (G2) n'étant pas associé à une unité de détection et le deuxième étage d'engrenage du deuxième engrenage (G2) formant l'étage d'engrenage en aval (G2S2) et étant pourvu de la deuxième unité de détection (E2).

9. Capteur rotatif (1) selon au moins l'une des revendications précédentes, **caractérisé en ce que** l'unité d'évaluation vérifie si la position angulaire de l'étage d'engrenage en aval (G2S2) du deuxième engrenage (G2) varie selon le rapport connu des rotations par rapport à la position angulaire du premier étage d'engrenage (G1S1) du premier engrenage (G1), ou si la position angulaire de l'étage d'engrenage en aval (G2S2) du deuxième engrenage (G2) ne change pas dans le rapport connu avec, en particulier complètement indépendamment d'un changement de position angulaire du premier étage d'engrenage (G1S1) du premier engrenage (G1).

10. Capteur rotatif (1) selon l'une des revendications précédentes 1 à 9, **caractérisé en ce que** chaque étage d'engrenage (G1S1, G2S1, G2S2, G2S3) est lui-même constitué d'engrenages en cascade et est séparé à l'étage d'engrenage en aval (G2S2, G2S3) par une roue engrenage de sortie (Z1, Z21, Z22, Z23), qui fournit une vitesse de sortie prévue pour l'étage d'engrenage respectif à l'étage d'engrenage en aval (G2S2, G2S3).

11. Capteur rotatif (1) selon la revendication 10, **caractérisé en ce que** la roue dentée de sortie (Z1) du premier étage d'engrenage (G1S1) du premier engrenage (G1) et la roue dentée de sortie (Z22) de l'étage d'engrenage en aval (G2S2) du deuxième engrenage (G2) sont chacune équipées de la première et de la deuxième unité de détection (E1, E2) respectivement, et la roue dentée de sortie (Z21) du premier étage d'engrenage (G2S1) du deuxième engrenage (G2) ne comporte pas d'unité de détection.
